# FASCICULE DE BREVET EUROPEEN

(11) **EP 1 831 820 B1**
(45) Date de publication et mention de la délivrance du brevet: **09.04.2008**
(21) Numéro de dépôt: 05850589.2
(22) Date de dépôt: 22.12.2005
(51) Int. Cl.: G06K 9/00, G06K 9/20

(54) **DISPOSITIF OPTIQUE DE CAPTURE BIOMETRIQUE AVEC AFFICHAGE D'INFORMATION A DESTINATION DE L'UTILISATEUR**
OPTISCHE BIOMETRIKERFASSUNGSVORRICHTUNG MIT INFORMATIONSANZEIGE FÜR DEN BENUTZER
BIOMETRIC CAPTURE OPTICAL DEVICE WITH INFORMATION DISPLAY FOR THE USER

(30) Priorité: 28.12.2004 FR 0413987
(43) Date de publication de la demande: 12.09.2007
(73) Titulaire: SAGEM Sécurité, 75015 Paris (FR)
(72) Inventeur: TISSOT, Nicolas, F-95240 Cormeilles en Parisis (FR); SALIBA, Eric, F-78400 Châtou (FR)
(74) Mandataire: Cabinet Plasseraud
(86) Numéro de dépôt international: PCT/FR2005/003249
(87) Numéro de publication internationale: WO 2006/070119

(56) Documents cités:
- WO-A-00/38096
- WO-A-02/077907
- FR-A- 2 774 793
- GB-A- 2 331 613
- US-A- 3 975 711
- US-A- 5 187 748
- SEIGO IGAKI ET AL: "HOLOGRAPHIC FINGERPRINT SENSOR" FUJITSU-SCIENTIFIC AND TECHNICAL JOURNAL, FUJITSU LIMITED. KAWASAKI, JP, vol. 25, no. 4, 21 décembre 1989 (1989-12-21), pages 287-296, XP000103957 ISSN: 0016-2523

## Description

La présente invention concerne le domaine général de la capture biométrique, telle notamment l'obtention d'empreinte digitale, et elle concerne plus particulièrement des perfectionnements apportés aux dispositifs optiques de capture biométrique comprenant
. un élément optique prismatique dont au moins une partie d'une face apparaît dans une fenêtre et constitue une surface d'appui pour l'apposition d'un organe corporel dont on souhaite former une image biométrique et
. des moyens d'éclairage disposés par rapport à l'élément optique prismatique de manière à éclairer, par l'intérieur de ce dernier, ladite fenêtre et, en cas de présence d'un organe corporel apposé sur ladite surface d'appui de la fenêtre, former par dispersion une image biométrique dudit organe corporel.

Les dispositifs optiques de capture biométrique sont d'un emploi toujours plus étendu pour le contrôle d'accès de personnes autorisées (autorisation d'entrée dans un site, autorisation d'emploi d'un appareillage, ...).

Il est courant que ces dispositifs possèdent un afficheur propre à fournir une ou plusieurs informations aux utilisateurs, telles qu'une indication de la disponibilité ou de l'indisponibilité du dispositif, une indication de ce que l'utilisateur doit faire (par exemple "apposer l'index droit"), une indication sur le succès ou l'échec de l'opération de reconnaissance, etc. Ces informations peuvent être alphanumériques et/ou symboliques.

Dans les dispositifs actuels, tel celui exposé dans le document WO-02077907 ou celui exposé dans le document WO-0038096, l'afficheur est disposé à côté de la fenêtre délimitant la surface d'apposition d'un doigt. Il en résulte que le boîtier qui regroupe l'ensemble est relativement volumineux.

Au moins pour certaines configurations d'utilisation, il est souhaité que le dispositif, y compris son afficheur, soit abrité dans un boîtier plus petit et moins encombrant.

Dans le document US 5 187 748, il est mentionné l'existence d'un capteur optique d'empreintes digitales avec affichage simultané sur moniteur permettant l'ajustement de la position du doigt.

Par ailleurs, il existe également des dispositifs optiques de capture biométrique qui sont dépourvus de quelconques moyens d'affichage d'information à destination des utilisateurs. Ces dispositifs sont moins encombrants que les précédents. Dans certains cas, il est souhaité de pouvoir en réaliser une version évoluée équipée de manière qu'une information puisse être présentée aux utilisateurs, sans accroissement des dimensions du boîtier.

L'invention a pour but de proposer une solution permettant de donner satisfaction aux requêtes de la pratique et, à cette fin, de proposer un dispositif optique de capture biométrique qui, tout en étant abrité dans un boîtier de relativement petites dimensions, puisse fournir un affichage d'information à destination des utilisateurs.

A cette fin, l'invention propose un dispositif optique de capture biométrique tel que mentionné au préambule qui, étant agencé conformément à l'invention, se caractérise en ce qu'il comporte en outre des moyens de présentation d'information lumineuse qui sont disposés sous l'élément optique prismatique et approximativement en regard de ladite fenêtre de manière à transmettre, sans dispersion, à travers la fenêtre une information lumineuse perceptible de l'extérieur.

Grâce à cet agencement, l'information lumineuse apparaissant à travers ladite fenêtre peut, en l'absence d'organe corporel apposé sur ladite surface d'appui, être perçue par un observateur. Autrement dit, la fenêtre sert sélectivement à la transmission d'information lumineuse soit par réflexion totale pour la transmission de l'image biométrique lorsqu'un organe corporel est apposé sur la surface extérieure, soit par réfraction pour la transmission d'information lumineuse à destination des utilisateurs dans le cas où aucun organe corporel n'est apposé sur ladite surface. Le dispositif peut ainsi être réalisé sous une forme compacte, moins encombrante que les dispositifs antérieurs à afficheur latéral, tandis que des dispositifs dépourvus d'afficheur de présentation d'information peuvent en être équipés sans accroissement du volume du boîtier.

Quels que soient les moyens effectivement mis en oeuvre comme il sera expliqué plus loin, il est souhaitable que le dispositif comporte des moyens de commande propres à inhiber les moyens de présentation d'information lorsqu'un organe corporel est apposé sur ladite surface d'appui, de manière que la présentation de l'information lumineuse (laquelle de toute façon n'est pas perceptible par l'utilisateur du fait que l'organe corporel occulte en grande partie la fenêtre) n'interfère pas avec le faisceau lumineux transportant l'image biométrique lors du fonctionnement en mode de capture biométrique.

Dans un mode de réalisation particulièrement intéressant qui est plus spécifiquement visé dans le cadre de l'invention, l'élément optique prismatique comporte deux faces sensiblement parallèles, dont une, extérieure, présente la susdite fenêtre, et une face latérale inclinée qui est noire ; en regard de l'autre, intérieure, des faces parallèles et en regard de ladite fenêtre sont situés les moyens d'éclairage (en mode de fonctionnement de capture biométrique, l'organe corporel apposé sur la surface extérieure de la fenêtre provoque, en conjonction avec la face inclinée noire, une réflexion totale de la lumière transmettant l'image biométrique) et les moyens de présentation d'information lumineuse (en l'absence d'organe corporel apposé sur ladite face extérieure de la fenêtre, la lumière véhiculant l'information traverse ladite face de la fenêtre).

Pour une mise en oeuvre simple et compacte de cette disposition, on prévoit que les moyens d'éclairage comprennent des diodes électroluminescentes disposées en une plaque sensiblement parallèle à la susdite face intérieure de l'élément optique prismatique et qu'un écran LCD transparent soit interposé entre ladite plaque de diodes et ladite face intérieure de l'élément optique prismatique, ce grâce à quoi, en présence d'un organe corporel apposé sur ladite surface d'appui, les moyens d'éclairage éclairent ledit organe corporel à travers l'écran LCD transparent et en fournissent par réflexion totale une image biométrique, tandis que, en l'absence d'organe corporel apposé sur ladite surface d'appui, les moyens d'éclairage traversent l'écran LCD commandé pour présenter une information et fournissent, après traversée de l'élément optique prismatique, une information lumineuse à un observateur.

De façon avantageuse alors, il est intéressant que le dispositif comprenne en outre un organe optique convergent de focalisation disposé entre l'écran LCD et ladite face intérieure de l'élément optique prismatique.

Cet agencement peut donner lieu à diverses réalisations. Dans un exemple de réalisation préféré, on peut prévoir que l'organe optique convergent soit propre à focaliser une image de l'information lumineuse sur un écran situé approximativement au-dessus de ladite fenêtre, ou à une distance adaptée à la perception visuelle directe de l'observateur. Une réalisation intéressante peut concerner un dispositif équipé d'une visière, connue en soi, de protection contre l'éclairage parasite ambiant disposée au-dessus de ladite fenêtre : dans ce cas, au moins une partie de ladite visière en regard de ladite fenêtre est constituée en un matériau translucide et l'organe optique convergent est propre à focaliser l'image d'information lumineuse sur ladite partie translucide de la visière ou au travers de celle-ci à une distance adaptée à la perception visuelle directe de l'observateur, ce grâce à quoi l'utilisateur, qui domine la visière, perçoit facilement l'information qui apparaît sur ou à travers cette dernière.

Dans une réalisation compacte et de fabrication simple, il est intéressant que l'organe optique convergent soit intégré dans la face intérieure de l'élément optique prismatique.

L'invention sera mieux comprise à la lecture de la description détaillée qui suit de certains modes de réalisation préférés de l'invention qui sont donnés à titre purement illustratif. Dans cette description, on se réfère aux dessins annexés sur lesquels .
- les figures 1A et 1B sont des vues très schématiques illustrant de façon simplifiée les dispositions fondamentales d'un dispositif optique de capture biométrique agencé conformément à l'invention, montré respectivement dans deux situations fonctionnelles différentes ;
- les figures 2A et 2B sont des vues schématiques d'un mode de réalisation intéressant d'un dispositif optique de capture biométrique agencé conformément à l'invention, montré respectivement dans deux situations fonctionnelles différentes ;
- les figures 3A et 3B sont des vues schématiques d'un mode de réalisation préféré du dispositif des figures 2A et 2B, montré respectivement dans deux situations fonctionnelles différentes ;
- les figures 4A et 4B sont des vues schématiques similaires aux figures 3A et 3B, suivant une variante de réalisation ;
- la figure 5 est une vue schématique partielle illustrant un mode de réalisation préféré d'une partie du dispositif des figures 4A et 4B ; et
- les figures 6A et 6B sont des vues schématiques similaires aux figures 4B et 4B, suivant encore un autre mode de réalisation.

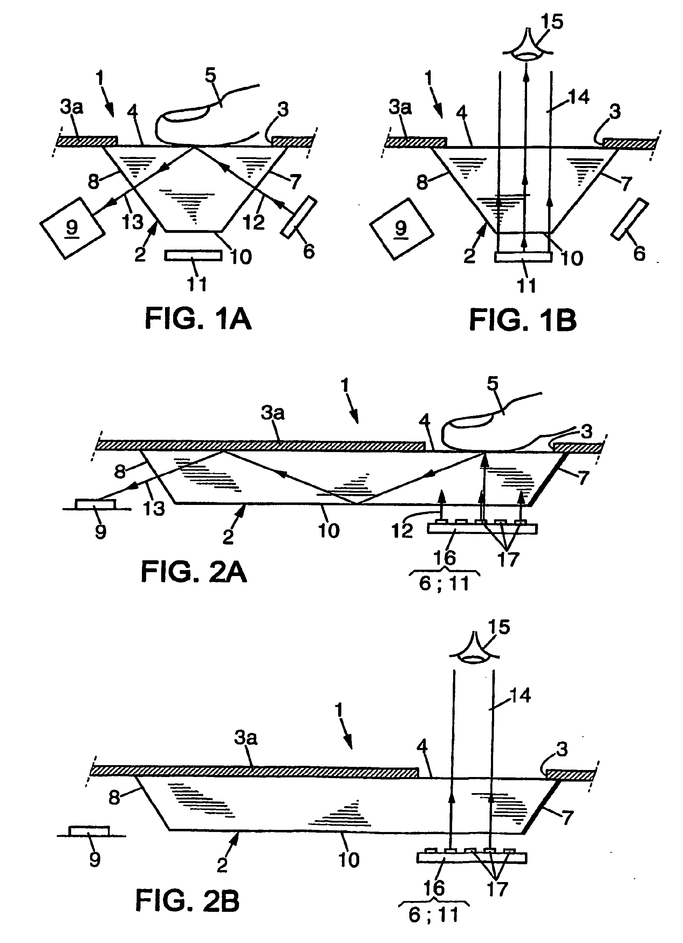

Comme schématisé à la figure 1A, un dispositif optique de capture biométrique, désigné dans son ensemble par la référence 1, comprend :
. un élément optique prismatique 2 dont au moins une partie d'une face principale 4 apparaît dans une fenêtre 3 (par exemple définie par un capot 3a) et constitue une surface d'appui pour l'apposition d'un organe corporel 5 (par exemple l'extrémité d'un doigt de la main) dont on souhaite former une image biométrique et
. des moyens d'éclairage 6 disposés par rapport à l'élément optique prismatique 2 de manière à éclairer, par l'intérieur de ce dernier, ladite face 4 dans la fenêtre 3.

Dans l'exemple schématique de la figure 1A, les moyens d'éclairage 6 sont disposés en regard d'une face latérale 7 de l'élément optique prismatique 2 de manière telle que le rayonnement d'éclairage atteigne la face latérale 7 sensiblement perpendiculairement et pénètre par réfraction dans ledit élément optique prismatique 2 sensiblement sans déviation notable.

En regard de l'autre face latérale 8 et sensiblement parallèlement à celle-ci se trouve un capteur de rayonnement 9.

Enfin, en regard de la petite face 10 (située à l'opposé de la face principale 4 et sensiblement parallèlement à celle-ci) de l'élément optique prismatique 2 sont situés des moyens 11 d'émission d'information lumineuse propres, lorsqu'ils sont excités, à émettre un faisceau lumineux porteur d'une information.

Dans la situation fonctionnelle montrée à la figure 1A, un organe corporel 5, tel qu'un doigt, est apposé sur la partie de la face 4 précitée définie par la fenêtre 3. Les moyens d'éclairage 6, qui sont excités, émettent un rayonnement 12 qui, pénétrant dans l'élément optique prismatique par la face latérale 7, éclaire la face 4 et est réfléchi avec réflexion totale en raison de la présence de l'organe corporel 5 apposé sur ladite face 4.

Le rayonnement 13 réfléchi, véhiculant l'image biométrique de l'organe corporel 5, parvient sur l'autre face latérale 8 sensiblement perpendiculairement à celle-ci, sort de l'élément optique prismatique 2 par réfraction sans déviation notable et atteint le capteur 9.

Dans cette situation fonctionnelle du dispositif, les moyens 11 d'émission d'information lumineuse ne sont de préférence pas excités de manière que la lumière qu'ils émettent n'interfère pas avec le rayonnement 12 d'éclairage de l'organe corporel 5.

En dehors du laps de temps pendant lequel un organe corporel .5 est apposé sur la partie de la face 4 définie par la fenêtre 3 en vue d'une capture biométrique, les moyens d'éclairage 6 peuvent de préférence être éteints comme montré à la figure 1B, tandis que les moyens 11 d'émission d'information lumineuse sont excités. La lumière 14 qu'ils émettent traverse la petite face 10 et la face principale 4 sensiblement perpendiculairement à celles-ci, de sorte qu'un observateur 15 situé en regard de la fenêtre 3 perçoit une information lumineuse telle que générée par les moyens 11.

Des moyens de commande (non représentés) devraient, dans ce contexte, être prévus pour commander de façon sélective l'excitation des moyens d'éclairage 6 et l'excitation des moyens 11 d'émission d'information lumineuse selon qu'un organe corporel 5 est apposé ou non sur la partie de la face 4 définie par la fenêtre 3.

L'agencement qui vient d'être décrit permet de capter une image biométrique de l'organe corporel 5 de façon conventionnelle, tandis que, en l'absence d'organe corporel, le dispositif émet une information lumineuse à destination des utilisateurs (par exemple signal de disponibilité ou d'indisponibilité de l'appareil, information sur la manoeuvre à effectuer, etc.). Le même dispositif optique est, conformément à l'invention, apte à assumer les deux fonctions sous une forme beaucoup plus compacte que les dispositifs actuels mettant en oeuvre deux fenêtres juxtaposées.

Les figures 2A et 2B (sur lesquelles les mêmes références numériques sont conservées pour désigner des organes ou parties analogues à ceux respectifs des figures 1A et 1B) illustrent un mode de réalisation pratique des dispositions de principe qui viennent d'être exposées.

L'élément optique prismatique 2 est d'un type allongé, avec la fenêtre 3 située au voisinage de la face inclinée 7 opposée à la face inclinée 8 de sortie du rayonnement 13 véhiculant l'image de capture biométrique. La face 7 est noire de manière à constituer une face de réflexion totale à l'intérieur de l'élément optique prismatique 2. Enfin, les moyens d'éclairage et les moyens d'émission d'information lumineuse précités sont réunis en une seule unité 16 agencée sous forme d'une plaque disposée sensiblement parallèlement à la face inférieure 10 de l'élément optique prismatique 2. Cette unité 16 peut en pratique être constituée d'une matrice de diodes électroluminescentes 17.

Dans la situation fonctionnelle montrée à la figure 2A, un organe corporel 5, tel qu'un doigt, est apposé sur la partie de la face 4 précitée définie par la fenêtre 3. Au moins un certain nombre des diodes 17, qui sont excitées, émettent un rayonnement 12 qui, pénétrant dans l'élément optique prismatique par la face intérieure 10, éclaire la face 4 et est réfléchi par dispersion en raison du contact de l'organe corporel 5 apposé sur ladite face 4 ; l'image biométrique de l'organe corporel 5 apparaît sur un fond noir généré par la face latérale 7 qui est noire (les nervures de l'empreinte digitale apparaissent en blanc et les sillons en noir). Le rayonnement réfléchi 13 parcourt toute la longueur de l'élément optique prismatique 2 par des réflexions totales multiples sur ses faces opposées 4 et 10 jusqu'à sortir par l'autre face latérale 8 pour parvenir sur le capteur 9.

En dehors du laps de temps pendant lequel un organe corporel 5 est apposé sur la partie de la face 4 définie par la fenêtre 3 en vue d'une capture biométrique, comme montré à la figure 2B, les diodes ayant servi à l'éclairage dans la situation fonctionnelle de la figure 1A ou certaines d'entre elles sont maintenant éteintes, et d'autres diodes de l'unité 16 ou certaines des diodes ayant servi à l'éclairage, sélectionnées de manière à reproduire un signe informatif ou un texte prédéterminé, sont excitées. La lumière 14 qu'elles émettent traverse la face intérieure 10 et la face principale 4 sensiblement perpendiculairement à celles-ci, de sorte qu'un observateur 15 situé en regard de la fenêtre 3 perçoit une information lumineuse.

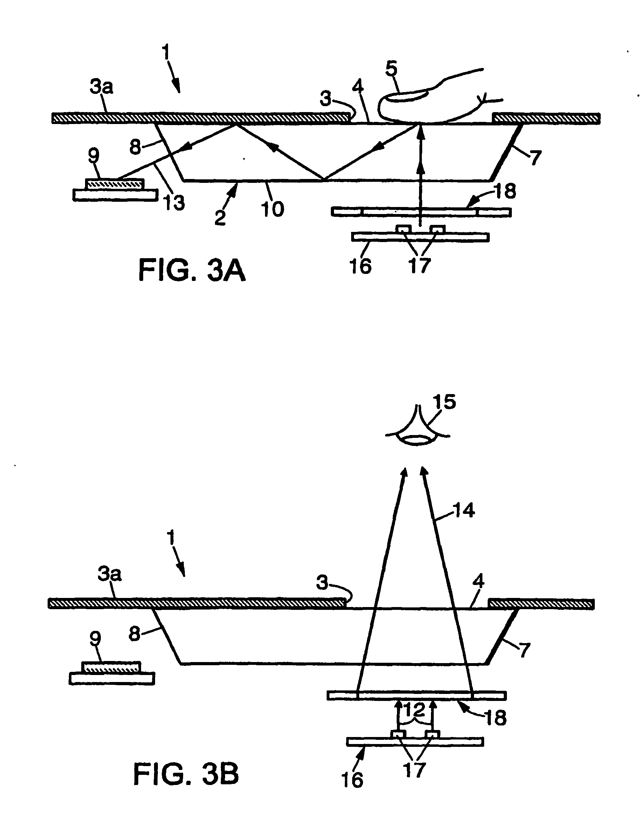

Les figures 3A et 3B illustrent un mode de réalisation préféré de l'agencement des figures 2A et 2B. Ce mode de réalisation préféré fait intervenir, en combinaison avec l'unité 16 de diodes électroluminescentes 17, toujours agencée sous forme d'une plaque sensiblement parallèle à la face intérieure 10 de l'élément optique prismatique 2, un écran LCD 18 transparent interposé entre l'unité 16 et la face 10.

Dans la situation fonctionnelle montrée à la figure 3A, un organe corporel 5, tel qu'un doigt, est apposé sur la partie de la face 4 précitée définie par la fenêtre 3. Toutes les diodes 17 de l'unité 16 sont excitées et émettent un rayonnement 12 qui, pénétrant dans l'élément optique prismatique 2 par la face intérieure 10, éclaire la face 4 et est réfléchi par dispersion dans les mêmes conditions que précédemment.

En dehors du laps de temps pendant lequel un organe corporel 5 est apposé sur la partie de la face 4 définie par la fenêtre 3 en vue d'une capture biométrique, comme montré à la figure 3B, toutes les diodes 17 ou au moins un nombre suffisant d'entre elles sont maintenues excitées et la lumière qu'elles émettent traverse l'écran LCD transparent. Cette lumière 14, véhiculant l'information affichée par l'écran LCD 18, l'élément optique prismatique 2 dont elle sort par la face principale 4 sensiblement perpendiculairement à celle-ci.

Le mode de réalisation préféré montré aux figures 3A et 3B est particulièrement intéressant en raison de la compacité qu'il permet d'obtenir et des modifications restreintes qu'il implique par rapport aux dispositifs actuels.

On soulignera que la commande du dispositif qui vient d'être décrit en regard des figures 3A et 3B est simplifiée : l'unité 16 reste en service en permanence et la lumière qu'elle émet sert sélectivement à la capture biométrique ou à la présentation d'information, selon qu'un organe corporel 5 est apposé ou non sur la face 4. Pour éviter qu'une présentation de l'information en permanence, y compris pendant les séquences de capture biométrique, perturbe le rayonnement véhiculant l'image de capture biométrique, on peut avantageusement prévoir que l'écran LCD 18 transparent soit excité seulement lorsqu'un organe corporel n'est pas appliqué sur la face 4 et ne soit pas excité lors du processus de capture biométrique (l'écran LCD 18 étant alors entièrement transparent).

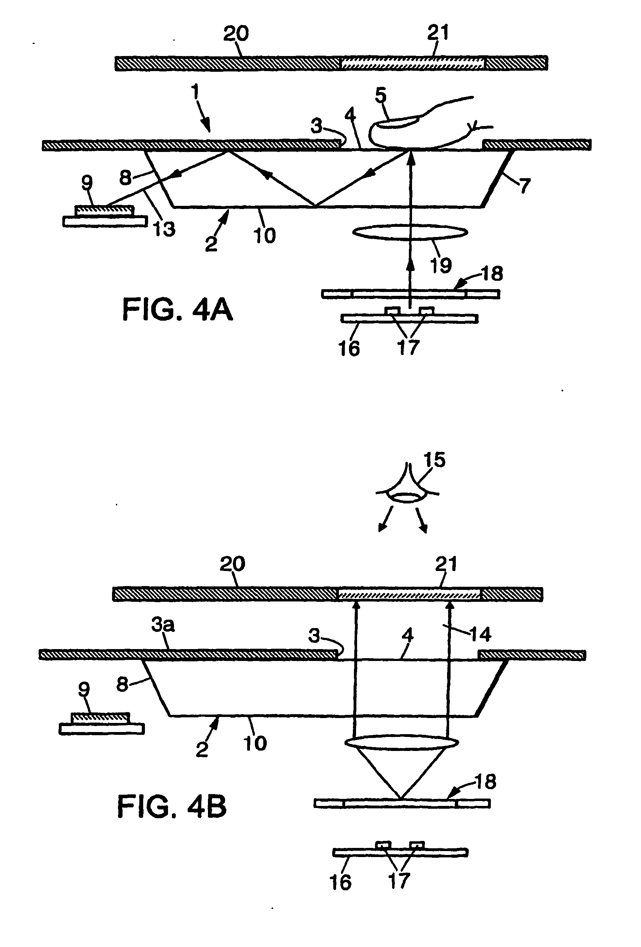

Les figures 4A et 4B illustrent une variante du mode de réalisation illustré sur les figures 3A et 4A. Suivant cette variante, un élément optique convergent 19 (typiquement une lentille convergente) est interposé entre l'écran LCD 18 et la face 10 pour focaliser l'information affichée par l'écran LCD 18. Pour le reste, la structure de l'ensemble est inchangée, à ceci près que, dans le contexte de cette variante, on peut avantageusement prévoir que l'élément optique convergent 19 soit propre à focaliser la lumière 14 de manière que l'image d'information qu'elle véhicule se forme sur un écran situé au-dessus de la fenêtre 3 ou à une distance adaptée à la perception visuelle directe de l'observateur, afin que l'utilisateur puisse observer cette image focalisée sur l'écran ou à travers celui-ci.

De façon astucieuse, il est prévu, conformément à l'invention, que l'écran ne soit pas une pièce supplémentaire rapportée sur l'appareil, mais soit tout simplement constitué par une visière de protection 20 connue en soi pour protéger l'appareil contre l'éclairage parasité (lumière ambiante, lumière du soleil). On prévoit alors qu'une partie de cette visière 20 située en regard de la fenêtre 3 soit formée en un matériau translucide de façon à constituer un hublot 21 sur la face externe duquel ou au travers duquel apparaît l'image d'information qui est ainsi rendue visible à l'observateur 15.

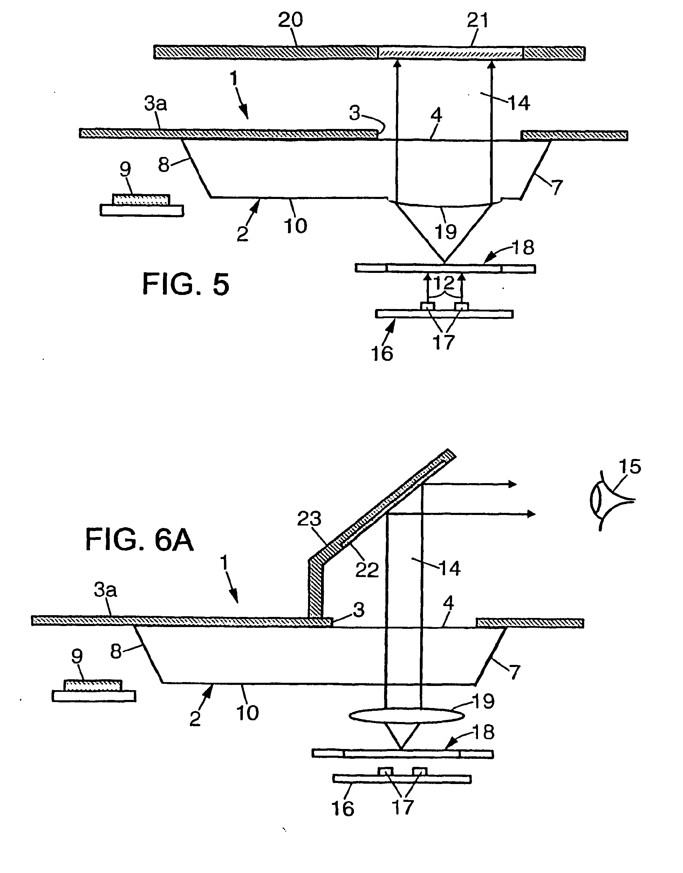

La figure 5 montre une variante intéressante et préférée de réalisation selon laquelle l'élément optique convergent 19 est incorporé dans la face intérieure 10 de l'élément optique prismatique 2, de sorte qu'il n'y a alors qu'un seul élément optique à fabriquer et à installer lors du montage. En variante, il est envisageable de coller sur la face inférieure 10 de l'élément optique prismatique 2 un dispositif rapporté tel qu'une lentille de Fresnel, jouant le même rôle que l'élément optique convergent 19 incorporé évoqué ci-dessus. Dans encore une autre variante, c'est le hublot 21 qui constitue l'élément optique convergent.

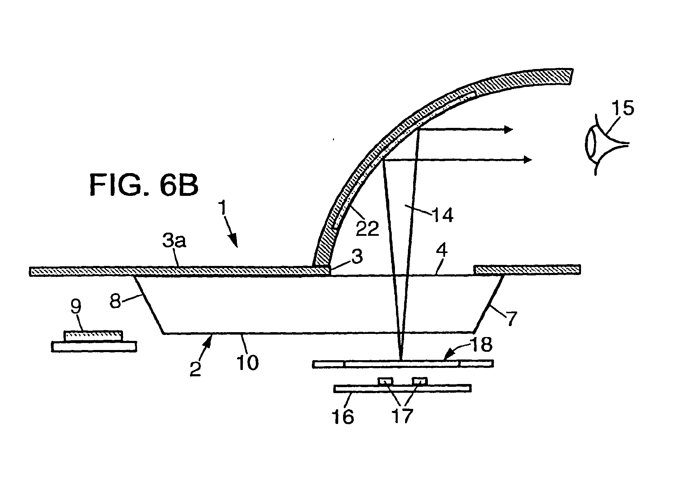

Les figures 6A et 6B montrent encore un autre mode de réalisation selon lequel l'information affichée par l'écran LCD 16 ne parvient pas directement à l'observateur 15, mais après avoir subi une réflexion sur une surface réfléchissante 22 disposée à l'aplomb de la face 4 et inclinée par rapport à celle-ci, cette surface réfléchissante étant soit plane (figure 6A), auquel cas il peut être avantageux de prévoir, comme précédemment, une lentille 19 de focalisation, soit concave (figure 6B), auquel cas la focalisation est effectuée par la surface 22 elle-même. La surface réfléchissante 22 est, dans l'exemple illustré sur les figures 6A et 6B, portée par une visière 23 montée sur le capot 3a ou formée d'un seul tenant avec celui-ci.

## Revendications

1. Dispositif optique (1) de capture biométrique comprenant
. un élément optique prismatique (2) comportant deux faces (4, 10) opposées et dont au moins une partie d'une des faces (4) apparaît dans une fenêtre (3) et constitue une surface d'appui pour l'apposition d'un organe corporel (5) dont on souhaite former une image biométrique, et comportant également une face (7) latérale inclinée qui est noire, et
des moyens d'éclairage (6; 16) disposés en regard de l'autre face (10) de l'élément optique prismatique (2) de manière à éclairer, par l'intérieur de ce dernier, ladite fenêtre (3) et, en cas de présence d'un organe corporel (5) apposé sur ladite surface d'appui de la fenêtre, former par dispersion une image biométrique dudit organe corporel,
**caractérisé en ce qu'**il comporte en outre des moyens (11; 16-19) de présentation d'information lumineuse qui sont disposés sous l'élément optique prismatique (2) en regard de l'autre face (10) de celui-ci et approximativement en regard de ladite fenêtre (3) de manière à transmettre, sans dispersion, à travers la fenêtre une image d'information lumineuse perceptible de l'extérieur, ce grâce à quoi l'image d'information lumineuse apparaissant à travers ladite fenêtre (3) peut, en l'absence d'organe corporel (5) apposé sur ladite surface d'appui, être perçue par un observateur (15).

2. Dispositif selon la revendication 1, **caractérisé en ce qu'**il comporte des moyens de commande propres à inhiber les moyens (11; 18) de présentation d'information lumineuse lorsqu'un organe corporel (5) est apposé sur ladite surface d'appui.

3. Dispositif selon la revendication 1 ou 2, **caractérisé en ce que** les deux faces (4, 10) de l'élément optique prismatique (2) sont sensiblement parallèles.

4. Dispositif selon la revendication 3, **caractérisé en ce que** les moyens d'éclairage (16) comprennent des diodes électroluminescentes (17) disposées en une plaque sensiblement parallèle à la susdite face intérieure (10) de l'élément optique prismatique (2) et **en ce qu'**un écran LCD (18) transparent est interposé entre ladite plaque de diodes et ladite face intérieure de l'élément optique prismatique (2),
ce grâce à quoi, en présence d'un organe corporel (5) apposé sur ladite surface d'appui, les moyens d'éclairage (16) éclairent ledit organe corporel (5) à travers l'écran LCD (18) transparent et en fournissent par réflexion totale une image biométrique, tandis que, en l'absence d'organe corporel (5) apposé sur ladite surface d'appui, les moyens d'éclairage (16) traversent l'écran LCD (18) commandé pour présenter une information et fournissent, après traversée de l'élément optique prismatique (2), une information lumineuse à un observateur (15).

5. Dispositif selon la revendication 4, **caractérisé en ce qu'**il comprend en outre un organe optique convergent (19) de focalisation qui est disposé entre l'écran LCD (18) et ladite face (10) intérieure de l'élément optique prismatique (2).

6. Dispositif selon la revendication 5, **caractérisé en ce que** l'organe optique convergent (19) est propre à focaliser l'image d'information lumineuse sur un écran (20) situé approximativement au-dessus de ladite fenêtre (3).

7. Dispositif selon la revendication 5, **caractérisé en ce que** l'organe optique convergent (19) est propre à focaliser l'image d'information lumineuse à une distance adaptée à la perception visuelle directe d'un observateur.

8. Dispositif selon l'une des revendications 5 à 7, dans lequel une visière (20) de protection contre l'éclairage parasite ambiant est disposée au-dessus de ladite fenêtre (3), **caractérisé en ce qu'**au moins une partie (21) de ladite visière en regard de ladite fenêtre (3) est constituée en un matériau translucide et **en ce que** l'organe optique convergent (19) est propre à focaliser une image de l'information lumineuse sur ladite partie translucide (21) de la visière ou au travers de celle-ci à une distance adaptée à la perception visuelle directe d'un observateur.

9. Dispositif selon l'une quelconque des revendications 5 à 8, **caractérisé en ce que** l'organe optique convergent (19) est intégré dans la face (10) intérieure de l'élément optique prismatique (2).

10. Dispositif selon l'une quelconque des revendications 1 à 4, **caractérisé en ce qu'**il comprend en outre un organe optique convergent de focalisation constitué par un hublot (21) formé dans un écran (20) situé approximativement au-dessus de ladite fenêtre (3).

11. Dispositif selon l'une quelconque des revendications 1 à 4, **caractérisé en ce qu'**il comporte une visière portant une surface réfléchissante (22) inclinée par rapport à la surface d'appui pour l'apposition de l'organe corporel, propre à réfléchir l'information lumineuse.

## Claims

1. An optical biometric acquisition device (1) comprising
• a prismatic optical element (2) comprising two opposite faces (4, 10) and of which at least a part of one face (4) appears in a window (3) and constitutes an application surface for the placement of a body member (5) of which a biometric image is intended to be formed, and also comprising one inclined side face (7) which is black, and
• illumination means (6; 16) arranged facing the other face (10) of the prismatic optical element (2) so as to illuminate said window (3) from inside the prismatic optical element, and, when there is a body member (5) placed on said application surface of the window, to form a biometric image of said body member by dispersion,
**characterized in that** it furthermore comprises means (11; 16-19) for presenting luminous information which are arranged under the prismatic optical element (2) facing the other face (3) thereof and approximately in correspondence with said window (3) so as to transmit an externally perceptible image of luminous information through the window without dispersion, whereby the image of luminous information appearing through said window (3) can be perceived by an observer (15) when there is no body member (5) placed on said application surface.

2. The device as claimed in claim 1, **characterized in that** it comprises control means arranged for inhibiting the means (11; 18) for presenting luminous information when a body member (5) is placed on said application surface.

3. The device as claimed in claim 1 or 2, **characterized in that** the two faces (4, 10) of the prismatic optical element (2) are substantially parallel.

4. The device as claimed in claim 3, **characterized in that** the illumination means (16) comprise light-emitting diodes (17) arranged in a panel substantially parallel to said inside face (10) of the prismatic optical element (2), and **in that** a transparent LCD screen (18) is interposed between said panel of diodes and said inside face of the prismatic optical element (2), whereby, when there is a body member (5) placed on said application surface, the illumination means (16) illuminate said body member (5) through the transparent LCD screen (18) and provide a biometric image thereof by total reflection, while, when there is no body member (5) placed on said application surface, the illumination means (16) pass through the LCD screen (18) controlled to present information and, after passing through the prismatic optical element (2), provide luminous information to an observer (15).

5. The device as claimed in claim 4, **characterized in that** it furthermore comprise a convergent focusing optical member (19) which is arranged between the LCD screen (18) and said inside face (10) of the prismatic optical element (2) .

6. The device as claimed in claim 5, **characterized in that** the convergent optical member (19) is arranged for focusing the image of luminous information onto a screen (20) located approximately above said window (3).

7. The device as claimed in claim 5, **characterized in that** the convergent optical member (19) is arranged for focusing the image of luminous information at a distance adapted for direct visual perception by an observer.

8. The device as claimed in one of claims 5 to 7, in which a visor (20) for protecting against stray ambient illumination is arranged above said window (3), **characterized in that** at least one part (21) of said visor in correspondence with said window (3) consists of a translucent material, and **in that** the convergent optical member (19) is capable of focusing an image of the luminous information onto said translucent part (21) of the visor or through it at a distance adapted for direct visual perception by an observer.

9. The device as claimed in any one of claims 5 to 8, **characterized in that** the convergent optical member (19) is integrated into the inner face (10) of the prismatic optical element (2).

10. The device as claimed in any one of claims 1 to 4, **characterized in that** it furthermore comprises a convergent focusing optical member consisting of a port (21) formed in a screen (20) located approximately above said window (3).

11. The device as claimed in any one of claims 1 to 4, **characterized in that** it comprises a visor having a reflective surface (22), inclined with respect to the application surface provided for placement of the body member, arranged for reflecting the luminous information.

## Patentansprüche

1. Optische Vorrichtung (1) zur biometrischen Erfassung, die Folgendes aufweist:
• ein optisches Prismenelement (2), das zwei gegenüberliegende Flächen (4, 10) aufweist, wobei mindestens ein Teil einer der Flächen (4) in einem Fenster (3) zu sehen ist und eine Auflagefläche zum Auflegen eines Körperteils (5) bildet, von dem eine biometrische Abbildung erhalten werden soll, und ferner eine schräge Seitenfläche (7) aufweist, die schwarz ist, und
• Beleuchtungsmittel (6; 16), die gegenüber der anderen Fläche (10) des optischen Prismenelements (2) angeordnet sind, um durch das Innere des Letzteren das Fenster (3) zu beleuchten und im Fall der Gegenwart eines auf der Auflagefläche des Fensters aufliegenden Körperteils (5) durch Streuung eine biometrische Abbildung des Körperteils zu bilden,
**dadurch gekennzeichnet, dass** sie ferner Mittel (11; 16-19) zur Darstellung von Leuchtmitteilungen aufweist, die unter dem optischen Prismenelement (2) gegenüber der anderen Fläche (10) desselben und in etwa gegenüber dem Fenster (3) angeordnet sind, um ohne Streuung durch das Fenster hindurch eine von außen erfassbare Abbildung einer Leuchtmitteilung zu senden,
wodurch die Abbildung der Leuchtmitteilung, die durch das Fenster (3) hindurch erscheint, in Abwesenheit eines auf der Auflagefläche aufliegenden Körperteils (5) von einem Betrachter (15) erfasst werden kann.

2. Vorrichtung nach Anspruch 1, **dadurch gekennzeichnet, dass** sie Steuerungsmittel umfasst, die dazu geeignet sind, die Mittel (11; 18) zur Darstellung von Leuchtmitteilungen zu sperren, wenn ein Körperteil (5) auf der Auflagefläche aufliegt.

3. Vorrichtung nach Anspruch 1 oder 2, **dadurch gekennzeichnet, dass** die beiden Flächen (4, 10) des optischen Prismenelements (2) im Wesentlichen parallel sind.

4. Vorrichtung nach Anspruch 3, **dadurch gekennzeichnet, dass** die Beleuchtungsmittel (16) Leuchtdioden (17) aufweisen, die an einer zur Innenfläche (10) des optischen Prismenelements (2) im Wesentlichen parallelen Platte angeordnet sind, und dass ein transparenter LCD-Bildschirm (18) zwischen der Platte der Dioden und der Innenfläche des optischen Prismenelements (2) angeordnet ist,
wodurch in Gegenwart eines auf der Auflagefläche aufliegenden Körperteils (5) die Beleuchtungsmittel (16) den Körperteil (5) durch den transparenten LCD-Bildschirm (18) hindurch beleuchten und durch Totalreflexion eine biometrische Abbildung davon liefern, während in Abwesenheit eines auf der Auflagefläche aufliegenden Körperteils (5) die Beleuchtungsmittel (16) durch den LCD-Bildschirm (18), der zum Darstellen einer Mitteilung gesteuert ist, hindurchtreten und nach Hindurchtreten durch das optische Prismenelement (2) einem Betrachter (15) eine Leuchtmitteilung bereitstellen.

5. Vorrichtung nach Anspruch 4, **dadurch gekennzeichnet, dass** sie ferner ein optisches Konvergenzelement (19) zur Fokussierung aufweist, das zwischen dem LCD-Bildschirm (18) und der Innenfläche (10) des optischen Prismenelements (2) angeordnet ist.

6. Vorrichtung nach Anspruch 5, **dadurch gekennzeichnet, dass** das optische Konvergenzelement (19) dazu geeignet ist, die Abbildung der Leuchtmitteilung an einem Schirm (20), der in etwa über dem Fenster (3) angeordnet ist, zu fokussieren.

7. Vorrichtung nach Anspruch 5, **dadurch gekennzeichnet, dass** das optische Konvergenzelement (19) dazu geeignet ist, die Abbildung der Leuchtmitteilung in einer Entfernung, die zur direkten visuellen Erfassung durch einen Betrachter geeignet ist, zu fokussieren.

8. Vorrichtung nach einem der Ansprüche 5 bis 7, in der ein Schutzschirm (20) zum Schutz vor parasitärer Umgebungsbeleuchtung über dem Fenster (3) angeordnet ist, **dadurch gekennzeichnet, dass** mindestens ein Abschnitt (21) des Schutzschirms gegenüber dem Fenster (3) aus einem durchscheinenden Material hergestellt ist, und dass das optische Konvergenzelement (19) dazu geeignet ist, die Abbildung der Leuchtmitteilung am durchscheinenden Abschnitt (21) des Schutzschirms oder durch diesen hindurch in einer Entfernung, die zur direkten visuellen Erfassung durch einen Betrachter geeignet ist, zu fokussieren.

9. Vorrichtung nach einem der Ansprüche 5 bis 8, **dadurch gekennzeichnet, dass** das optische Konvergenzelement (19) in die Innenfläche (10) des optischen Prismenelements (2) integriert ist.

10. Vorrichtung nach einem der Ansprüche 1 bis 4, **dadurch gekennzeichnet, dass** sie ferner ein optisches Konvergenzelement zur Fokussierung aufweist, das aus einem Sichtfenster (21) gebildet ist, welches in einem in etwa über dem Fenster (3) angeordneten Schirm (20) ausgebildet ist.

11. Vorrichtung nach einem der Ansprüche 1 bis 4, **dadurch gekennzeichnet, dass** sie einen Schutzschirm aufweist, der eine reflektierende Oberfläche (22) trägt, welche in Bezug auf die Auflagefläche für das Auflegen eines Körperteils geneigt ist und dazu geeignet ist, die Leuchtmitteilung anzuzeigen.
